# EUROPEAN PATENT APPLICATION

(11) **EP 4 561 175 A1**
(43) Date of publication of application: **28.05.2025**
(21) Application number: 23870057.9
(22) Date of filing: 23.08.2023
(51) Int. Cl.: H04W 36/08

(54) **CELL HANDOVER METHOD, TERMINAL DEVICE, AND NETWORK DEVICE**

(30) Priority: 26.09.2022 CN 202211174553
(71) Applicant: Honor Device Co., Ltd., Shenzhen, Guangdong 518040 (CN)
(72) Inventor: SHAN, Baokun, Shenzhen, Guangdong 518040 (CN)
(74) Representative: Isarpatent
(86) International application number: PCT/CN2023/114396
(87) International publication number: WO 2024/066812

(57) **Abstract**

Embodiments of this application provide a cell handover method, a terminal device, and a network device. A source network device sends cell configuration information including a first configuration parameter of each candidate cell and handover information including a second configuration parameter of a target cell, so that the terminal device can complete a process of handing over to the target cell. Because the source network device does not send a second configuration parameter of another candidate cell other than the target cell, signaling overheads of air interface transmission are effectively reduced. In addition, the network side does not need to reserve the corresponding second configuration parameter for the another candidate cell in advance. This helps effectively reduce resource overheads on the network side. In conclusion, both the air interface signaling overheads and the network overheads may be reduced.

## Description

This application claims priority to Chinese Patent Application No. 202211174553.X, filed with the China National Intellectual Property Administration on September 26, 2022 and entitled "CELL HANDOVER METHOD, TERMINAL DEVICE, AND NETWORK DEVICE", which is incorporated herein by reference in its entirety.

### TECHNICAL FIELD

This application relates to the field of wireless communication, and more specifically, to a cell handover method, a terminal device, and a base station in the communication field.

### BACKGROUND

During wireless communication, one network device (for example, a base station) may form one or more cells (cell) to cover a specific geographical range and provide a wireless communication service. A terminal device usually performs a communication service in only one cell at a same moment. When a terminal device that is performing a service moves or a wireless environment greatly changes, handover (handover) may occur, with a purpose of handing over the terminal device that is performing the service in a cell to another cell.

A conditional handover (conditional handover) mechanism is introduced in 3GPP. In the conditional handover mechanism, after obtaining all configuration parameters used for accessing each candidate cell, a network device sends a radio resource control (radio resource control, RRC) configuration message to a terminal device, where the RRC configuration message includes configuration parameters of each candidate cell and a handover condition for handing over to each candidate cell. After the terminal device receives the RRC configuration message, the terminal device determines whether the handover condition is satisfied. When the condition is satisfied, the terminal device accesses a target cell by using configuration parameters that are of a target cell (one of the candidate cells) and that are included in the RRC configuration message.

In the foregoing conditional handover mechanism, the network device sends all the configuration parameters of each candidate cell by using the RRC configuration message. However, the terminal device actually hands over to the target cell by using only the configuration parameters of the target cell, and configuration parameters of other candidate cells are not used. Consequently, large signaling overheads are caused during air interface transmission. In addition, the network side needs to reserve, for all the candidate cells in advance, all the configuration parameters used for accessing the candidate cells. Consequently, network overheads are greatly increased.

### SUMMARY

This application provides a cell handover method. Cell configuration information including a first configuration parameter of each candidate cell and handover information including a second configuration parameter of a target cell are sent, to complete a process of handing over to the target cell, so that network overheads and air interface signaling overheads may be considered. In other words, both the network overheads and the air interface signaling overheads may be reduced.

According to a first aspect, a cell handover method is provided, including:
receiving cell configuration information sent by a source network device, where the cell configuration information includes a first configuration parameter of each of M1 candidate cells, the first configuration parameter is a part of configuration parameters used for accessing each candidate cell, the first configuration parameter includes a cell identifier of each candidate cell, and M1 is an integer greater than or equal to 1;
sending a first measurement report to the source network device, where the first measurement report indicates signal quality of M2 of the M1 candidate cells, and M2 is less than or equal to M1;
receiving handover information sent by the source network device in response to the first measurement report, where the handover information includes a second configuration parameter of a target cell, the target cell belongs to the M2 candidate cells, the target cell is determined based on the signal quality of the M2 candidate cells, and the second configuration parameter of the target cell is a configuration parameter other than the first configuration parameter of the target cell in configuration parameters used for accessing the target cell; and
handing over to the target cell based on the first configuration parameter of the target cell and the second configuration parameter of the target cell.

According to the cell handover method provided in this embodiment of this application, the source network device first sends, to the terminal device, the obtained first configuration parameter of each (for example, M1) candidate cell, to facilitate preparation of handover of the candidate cell. After determining the target cell, the source network device sends the second configuration parameter of the target cell to the terminal device. Compared with an existing solution in which configuration parameters of all candidate cells are sent by using RRC signaling, in technical solutions provided in this embodiment of this application, information (the cell configuration information and the handover information) is sent to the terminal device twice, and a second configuration parameter of another candidate cell other than the target cell is not sent, to effectively reduce signaling overheads of air interface transmission. In addition, because the second configuration parameter includes a related parameter of the target cell, and may not be related to a parameter of another candidate cell other than the target cell, the network side does not need to reserve the corresponding second configuration parameter for the another candidate cell in advance, and only needs to reserve the first configuration parameter corresponding to the another candidate cell in advance. In addition, after the target cell is determined, the second configuration parameter of the target cell is reserved and sent to the terminal device. This can well reduce resource overheads on the network side.

Therefore, in this embodiment of this application, in the solution in which the source network device sends the cell configuration information including the first configuration parameter of each candidate cell and the handover information including the second configuration parameter of the target cell, the terminal device completes handover to the target cell, and network overheads and air interface signaling overheads may be considered. In other words, both the network overheads and the air interface signaling overheads may be reduced.

Optionally, the handover information is carried in downlink control information DCI or a media access control control element MAC CE.

According to the cell handover method provided in this embodiment of this application, because a transmission delay and overheads of underlying signaling (the DCI or the MAC CE) are small, the second configuration parameter of the target cell is sent by using the underlying signaling, to reduce an air interface delay and air interface overheads during handover. This is easy to implement. Generally, the air interface delay and the air interface signaling overheads during handover are further reduced.

Optionally, the second configuration parameter of the target cell includes: at least a part of parameters used for configuring random access channel PACH resources.

According to the cell handover method provided in this embodiment of this application, contention for the PACH resources are fierce. If corresponding PACH resources are reserved for each candidate cell in advance (where the PACH resources may be reserved for a long time), compared with other resources, the network side has higher reservation costs. Therefore, the second configuration parameter of the target cell includes at least a part of parameters used for configuring the PACH resources, so that the network side does not need to reserve at least a part of parameters that are of all candidate cells and that are used for configuring PACH resources in advance. Only after the target cell is determined, the network side may only need to reserve at least a part of parameters of the target cell, to further effectively reduce resource overheads on the network side.

In addition, with reference to an embodiment in which the handover information is carried in the downlink control information DCI or the media access control control element MAC CE, because the MAC CE or the DCI has a small capacity, a capacity of the at least a part of parameters that are of the target cell in the handover information and that are used for configuring the PACH resources is also small. Therefore, it is easier to send, by using the MAC CE or the DCI, the at least a part of parameters that are of the target cell and that are used for configuring the PACH resources.

Optionally, the at least a part of parameters include: a preamble index.

According to the cell handover method provided in this embodiment of this application, each cell has 64 preambles for selection, so that preambles allocated to different terminal devices are different in many cases. In other words, preambles of different cells are different to a large extent, and cannot be shared with another terminal device in the cell to a large extent. Therefore, when a capacity that can be accommodated by the handover information is limited, the second configuration parameter includes the preamble index. This can reduce a delay and signaling overheads and is easier to implement.

Optionally, before the receiving cell configuration information sent by a source network device, the method further includes:
receiving a measurement configuration sent by the source network device, where the measurement configuration is used for measurement of a plurality of neighboring cells; and
sending a second measurement report to the source network device in response to the measurement configuration, where the second measurement result indicates signal quality of N of the plurality of neighboring cells, and the N neighboring cells include the M1 candidate cells.

According to the cell handover method provided in this embodiment of this application, the source network device may send the measurement configuration to the terminal device in advance when signal quality of a serving cell is good or not poor. The terminal device may report the second measurement report based on the measurement configuration, so that the source network device can obtain first configuration parameters of the M1 candidate cells in advance based on the second measurement report, so that the network side prepares for cell handover of the terminal device in advance. In this way, a handover success rate can be increased, communication interruption for a long time is avoided, and user experience is improved.

According to a second aspect, a cell handover method is provided, including:
sending cell configuration information to a terminal device, where the cell configuration information includes a first configuration parameter of each of M1 candidate cells, the first configuration parameter is a part of configuration parameters used for accessing each candidate cell, the first configuration parameter includes a cell identifier of each candidate cell, and M1 is an integer greater than or equal to 1;
receiving a first measurement report sent by the terminal device, where the first measurement report indicates signal quality of M2 of the M1 candidate cells; and
sending handover information to the terminal device, where the handover information includes a second configuration parameter of a target cell, the target cell belongs to the M2 candidate cells, the target cell is determined based on the signal quality of the M2 candidate cells, and the second configuration parameter of the target cell is a configuration parameter other than the first configuration parameter of the target cell in configuration parameters used for accessing the target cell.

According to the cell handover method provided in this embodiment of this application, the source network device first sends, to the terminal device, the obtained first configuration parameter of each (for example, M1) candidate cell, to facilitate preparation of handover of the candidate cell. After determining the target cell, the source network device sends the second configuration parameter of the target cell to the terminal device. Compared with an existing solution in which configuration parameters of all candidate cells are sent by using RRC signaling, in technical solutions provided in this embodiment of this application, information (the cell configuration information and the handover information) is sent to the terminal device twice, and a second configuration parameter of another candidate cell other than the target cell is not sent, to effectively reduce signaling overheads of air interface transmission. In addition, because the second configuration parameter includes a related parameter of the target cell, and may not be related to a parameter of another candidate cell other than the target cell, the network side does not need to reserve the corresponding second configuration parameter for the another candidate cell in advance, and only needs to reserve the first configuration parameter corresponding to the another candidate cell in advance. In addition, after the target cell is determined, the second configuration parameter of the target cell is reserved and sent to the terminal device. This can well reduce resource overheads on the network side.

Therefore, in this embodiment of this application, in the solution in which the source network device sends the cell configuration information including the first configuration parameter of each candidate cell and the handover information including the second configuration parameter of the target cell, the terminal device completes handover to the target cell, and network overheads and air interface signaling overheads may be considered. In other words, both the network overheads and the air interface signaling overheads may be reduced.

Optionally, the handover information is carried in downlink control information DCI or a media access control control element MAC CE.

According to the cell handover method provided in this embodiment of this application, because a transmission delay and overheads of underlying signaling (the DCI or the MAC CE) are small, the second configuration parameter of the target cell is sent by using the underlying signaling, to reduce an air interface delay and air interface overheads during handover. This is easy to implement. Generally, the air interface delay and the air interface signaling overheads during handover are reduced.

Optionally, the second configuration parameter of the target cell includes: at least a part of parameters used for configuring random access channel PACH resources.

According to the cell handover method provided in this embodiment of this application, contention for the PACH resources are fierce. If corresponding PACH resources are reserved for each candidate cell in advance (where the PACH resources may be reserved for a long time), compared with other resources, the network side has higher reservation costs. Therefore, the second configuration parameter of the target cell includes at least a part of parameters used for configuring the PACH resources, so that the network side does not need to reserve at least a part of parameters that are of all candidate cells and that are used for configuring PACH resources in advance. Only after the target cell is determined, the network side may only need to reserve at least a part of parameters of the target cell, to further effectively reduce resource overheads on the network side.

In addition, with reference to an embodiment in which the handover information is carried in the downlink control information DCI or the media access control control element MAC CE, because the MAC CE or the DCI has a small capacity, a capacity of the at least a part of parameters that are of the target cell in the handover information and that are used for configuring the PACH resources is also small. Therefore, it is easier to send, by using the MAC CE or the DCI, the at least a part of parameters that are of the target cell and that are used for configuring the PACH resources.

Optionally, the at least a part of parameters include: a preamble index.

According to the cell handover method provided in this embodiment of this application, each cell has 64 preambles for selection, so that preambles allocated to different terminal devices are different in many cases. In other words, preambles of different cells are different to a large extent, and cannot be shared with another terminal device in the cell to a large extent. Therefore, when a capacity that can be accommodated by the handover information is limited, the second configuration parameter includes the preamble index. This can reduce a delay and signaling overheads and is easier to implement.

Optionally, before the sending cell configuration information to a terminal device, the method further includes:
sending a first handover request to P1 candidate network devices, where the first handover request includes a terminal identifier of the terminal device, and P1 is an integer greater than or equal to 1; and
receiving first handover request response information that is sent by each of the P2 candidate network devices in response to the first handover request, where the first handover request response information includes a first configuration parameter of a candidate cell associated with each candidate network device, the P2 candidate network devices are at least a part of the P1 candidate network devices, and all candidate cells associated with the P2 candidate network devices are at least a part of the M1 candidate cells.

According to the cell handover method provided in this embodiment of this application, the source network device negotiates with the P1 candidate network devices by using the first handover request, to obtain the first configuration parameters of the M1 candidate cells. In addition, the candidate network devices do not need to reserve the second configuration parameter for each associated candidate cell. The network side reserves the second configuration parameter of the target cell only after the source network device determines the target cell. For the network side, compared with that in the conventional technology, a second configuration parameter of another cell other than the target cell in the M1 candidate cells is not reserved, to effectively reduce network overheads.

Optionally, before the sending handover information to the terminal device, the method further includes:
sending a second handover request to a target network device to which the target cell belongs, where the second handover request includes the terminal identifier of the terminal device, and the target network device is one of the P2 candidate network devices; and
receiving second handover request response information sent by the target network device, where the second handover request response information includes the second configuration parameter of the target cell.

According to the cell handover method provided in this embodiment of this application, the source network device negotiates with the P1 candidate network devices by using the first handover request, to obtain the first configuration parameters of the M1 candidate cells. In addition, the candidate network devices do not need to reserve the second configuration parameter for each associated candidate cell. The source network device sends the second handover request to the target network device to which the target cell belongs only after the source network device determines the target cell. In this case, the target network device reserves the second configuration parameter of the target cell. For the network side, compared with that in the conventional technology, a second configuration parameter of another cell other than the target cell in the M1 candidate cells is not reserved, to effectively reduce network overheads.

Optionally, the method further includes:
sending handover cancellation information to another network device other than the target network device in the P2 candidate network devices, where the handover cancellation information indicates the another network device to cancel handover.

According to the cell handover method provided in this embodiment of this application, the source network device sends the handover cancellation information to another network device other than the target network device in all the candidate network devices, so that the another network device may release resources (the first configuration parameter) previously reserved for each associated candidate cell, to further reduce network overheads.

Optionally, before the sending cell configuration information to a terminal device, the method further includes:
sending a measurement configuration to the terminal device, where the measurement configuration is used for measurement of a plurality of neighboring cells; and
receiving a second measurement report sent by the terminal device, where the second measurement result indicates signal quality of N of the plurality of neighboring cells, and the N neighboring cells include the M1 candidate cells.

According to the cell handover method provided in this embodiment of this application, the source network device negotiates with the P1 candidate network devices by using the first handover request, to obtain the first configuration parameters of the M1 candidate cells. In addition, the candidate network devices do not need to reserve the second configuration parameter for each associated candidate cell. The network side reserves the second configuration parameter of the target cell only after the source network device determines the target cell. For the network side, compared with that in the conventional technology, a second configuration parameter of another cell other than the target cell in the M1 candidate cells is not reserved, to effectively reduce network overheads.

According to a third aspect, a cell handover method is provided, including:
receiving a first handover request sent by a source network device, where the first handover request includes a terminal identifier of a terminal device;
sending first handover request acknowledgment information to the source network device in response to the first handover request, where the first handover request acknowledgment information includes a first configuration parameter of at least one candidate cell;
receiving a second handover request sent by the source network device, where the second handover request includes the terminal identifier of the terminal device; and
sending second handover request acknowledgment information to the source network device, where the second handover request acknowledgment information includes a second configuration parameter of the target cell, and the target cell belongs to the at least one candidate cell.

According to a fourth aspect, a terminal device is provided. The terminal device is configured to perform the method according to any one of the implementations of the first aspect. Specifically, the terminal device may include a module that is configured to perform any one of the implementations of the first aspect.

According to a fifth aspect, a network device is provided. The network device is configured to perform the method according to any one of the implementations of the second aspect or the third aspect. Specifically, the network device may include a module that is configured to perform any one of the implementations of the second aspect or the third aspect.

According to a sixth aspect, a terminal device is provided, including a processor. The processor is coupled to a memory, and may be configured to execute instructions in the memory, to implement the method according to any one of the possible implementations of the first aspect. Optionally, the terminal device further includes the memory. Optionally, the terminal device further includes a communication interface, and the processor is coupled to the communication interface.

According to a seventh aspect, a network device is provided, including a processor. The processor is coupled to a memory, and may be configured to execute instructions in the memory, to implement the method according to any one of the possible implementations of the second aspect or the third aspect. Optionally, the network device further includes the memory. Optionally, the network device further includes a communication interface, and the processor is coupled to the communication interface.

According to an eighth aspect, a computer-readable storage medium is provided, storing a computer program. When the computer program is executed by an apparatus, the apparatus is enabled to implement the method according to any one of the possible implementations of the first aspect, the second aspect, or the third aspect.

According to a ninth aspect, a computer program product including instructions is provided. When the instructions are executed by a computer, the apparatus is enabled to implement the method according to any one of the possible implementations of the first aspect, the second aspect, or the third aspect.

According to a tenth aspect, a chip is provided, including: an input interface, an output interface, a processor, and a memory. The input interface, the output interface, the processor, and the memory are connected to each other through an internal connection path. The processor is configured to execute code in the memory. When the code is executed, the processor is configured to perform the method according to any one of the possible implementations of the first aspect, the second aspect, or the third aspect.

### BRIEF DESCRIPTION OF DRAWINGS

FIG. 1 is a diagram of a structure of a communication system according to an embodiment of this application;
FIG. 2 shows a protocol architecture of a control plane of LTE or NR according to an embodiment of this application;
FIG. 3 is a schematic flowchart of a cell handover method according to an embodiment of this application;
FIG. 4 is another schematic flowchart of a cell handover method according to an embodiment of this application;
FIG. 5 is a block diagram of an apparatus according to an embodiment of this application; and
FIG. 6 is a diagram of a structure of an apparatus according to an embodiment of this application.

### DESCRIPTION OF EMBODIMENTS

The following describes technical solutions of this application with reference to accompanying drawings.

The technical solutions of embodiments of this application may be used in various communication systems, for example, a long-term evolution (long term evolution, LTE) system, an LTE frequency division duplex (frequency division duplex, FDD) system, an LTE time division duplex (time division duplex, TDD) system, a 5th generation (5th generation, 5G) system, a new radio (new radio, NR) system, or a future 6th generation (6th generation, 6G) system.

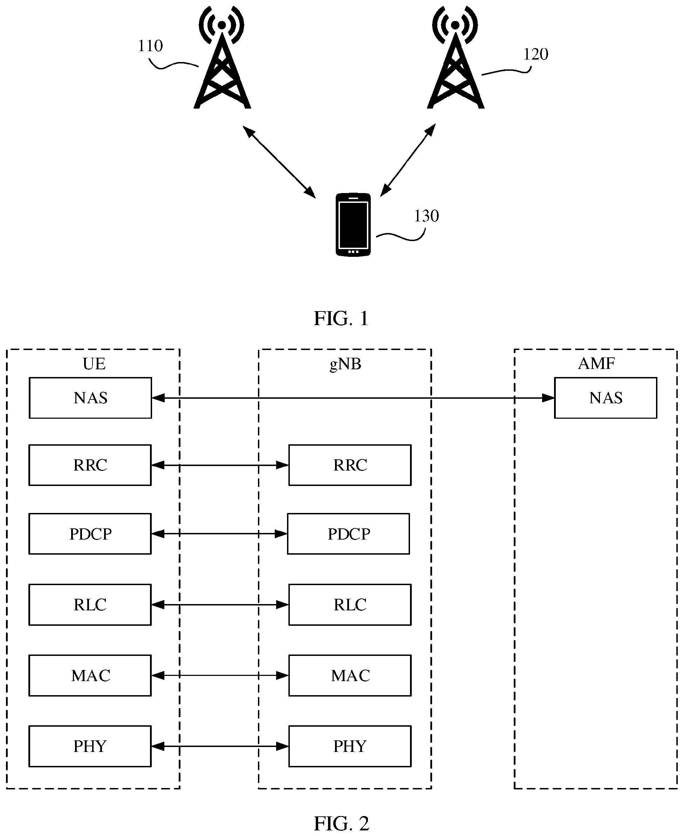

FIG. 1 is a diagram of a structure of a communication system according to an embodiment of this application. The communication system includes at least two network devices, for example, a network device 110 and a network device 120 shown in FIG. 1; and the communication system further includes at least one terminal device, for example, a terminal device 130 shown in FIG. 1. The terminal device 130 may be mobile or fixed. The network device 110 and the network device 120 are both devices, such as a base station or a base station controller, that may communicate with the terminal device 130 through a wireless link. Each network device may provide communication coverage for a specific geographical area, and may communicate with a terminal device located in the coverage area (a cell).

It should be understood that, FIG. 1 shows an example of two network devices and one terminal device, but this should not constitute any limitation on this application. For example, the communication system may include a larger quantity of network devices or terminal devices, and coverage of each network device may include another quantity of terminal devices. For example, the communication system may further include one or more core network devices. This is not limited in this embodiment of this application.

The terminal device in this embodiment of this application may be a device with a wireless transceiver function. The terminal device may be deployed on the land, including an indoor terminal device, an outdoor terminal device, a hand-held terminal device, a wearable terminal device, or an in-vehicle terminal device; may be deployed on the water (for example, on a ship); or may be deployed in the air (for example, on an aircraft, a balloon, a satellite, or the like). The terminal device may be a mobile phone (mobile phone), a tablet computer (Pad), a computer with a wireless transceiver function, a virtual reality (virtual reality, VR) terminal device, an augmented reality (augmented reality, AR) terminal device, a wireless terminal in industrial control (industrial control), an in-vehicle terminal device, a wireless terminal in self-driving (self driving), a wireless terminal in a remote medical surgery (remote medical), a wireless terminal in a smart grid (smart grid), a wireless terminal in transportation safety (transportation safety), a wireless terminal in a smart city (smart city), a wireless terminal in a smart home (smart home), a wearable terminal device, or the like. An application scenario is not limited in this embodiment of this application. The terminal may alternatively sometimes be referred to as a terminal device, user equipment (user equipment, UE), an access terminal device, an in-vehicle terminal, an industrial control terminal, a UE unit, a UE station, a mobile station, a mobile console, a remote station, a remote terminal device, a mobile device, a UE terminal device, a terminal device, a wireless communication device, a UE agent, a UE apparatus, or the like. The terminal device may be fixed or mobile.

The network device in this embodiment of this application may be a device configured to communicate with the terminal device, and may be any device having a wireless transceiver function. The network device includes but is not limited to: an evolved base station (NodeB, eNB, or e-NodeB, evolved Node B) in LTE; a base station (gNodeB or gNB) or a transmission reception point (transmission receiving point/transmission reception point, TRP) in NR; an access node, a wireless relay node, or a wireless backhaul node in a Wi-Fi system, and the like. The base station may be a macro base station, a micro base station, a pico base station, a small cell, a relay station, a balloon station, or the like. A plurality of base stations may support a network of same technology mentioned above, or may support a network of different technologies mentioned above. The base station may include one or more co-located or non-co-located TRPs. The network device may alternatively be a wireless controller, a CU, and/or a DU in a cloud radio access network (cloud radio access network, CRAN) scenario. The network device may further be a server, a wearable device, an in-vehicle device, or the like. In an embodiment in which the network device is a base station, a plurality of network devices may be base stations of a same type, or may be base stations of different types. The base station may communicate with a terminal device, or may communicate with a terminal device via a relay station. The terminal device may communicate with a plurality of base stations of different technologies. For example, the terminal device may communicate with a base station supporting an LTE network, or may communicate with a base station supporting a 5G network, or may support dual connectivity between a base station in an LTE network and a base station in a 5G network.

For ease of understanding of embodiments of this application, the following first briefly describes several terms in embodiments of this application.

### 1. Cell (cell)

A cell is described from a perspective of a high layer in terms of resource management, mobility management, or a serving unit. Coverage of each network device may be divided into one or more cells, and each cell may correspond to one or more frequencies, or each cell may be considered as an area formed by coverage of one or more frequencies.

It should be noted that, the cell may be an area within coverage of a wireless network of a network device. In this embodiment of this application, different cells may correspond to a same or different network devices. For example, a network device to which a cell # 1 belongs and a network device to which a cell # 2 belongs may be different network devices, for example, base stations. That is, the cell # 1 and the cell # 2 may be managed by different base stations. For another example, a network device to which a cell # 1 belongs and a network device to which a cell # 2 belongs may be a same network device, for example, a base station. That is, the cell # 1 and the cell # 2 may be managed by a same base station. In this case, the cell # 1 and the cell # 2 are co-located. This is not particularly limited in this application. For another example, a network device that manages a cell # 1 and a network device that manages a cell # 2 may alternatively be different radio frequency processing units of a same base station, for example, a radio remote unit (radio remote unit, RRU). That is, the cell # 1 and the cell # 2 may be managed by a same base station, and have a same baseband processing unit and a same intermediate frequency processing unit, but have different radio frequency processing units.

In this embodiment of this application, a serving cell, a neighboring cell, a candidate cell, and a target cell are defined.

Serving cell: A cell that serves a terminal device before handover.

Neighboring cell: A cell around a serving cell.

Candidate cell: A cell, or a candidate cell, to which a terminal device may be handed over when a condition is satisfied.

Target cell: A cell that serves a terminal device after handover. The target cell is one of candidate cells.

The serving cell and the target cell may belong to a same network device, or may belong to different network devices. The serving cell and the candidate cell may belong to a same network device, or may belong to different network devices. The candidate cell and the target cell may belong to a same network device, or may belong to different network devices. This is not limited in this embodiment of this application.

If the serving cell and the target cell belong to a same network device (for example, a base station), the handover may be referred to as intra-cell handover. If the serving cell and the target cell belong to different network devices (for example, base stations), the handover is referred to as inter-cell handover.

### 2. Source network device, candidate network device, and target network device

Source network device: A network device to which a serving cell belongs.

Candidate network device: A network device to which a candidate cell belongs.

Target network device: A network device to which a target cell belongs.

It should be understood that, when there is only one candidate network device, a target network device is the candidate network device. When there are a plurality of candidate network devices, a target network device is one of the candidate network devices.

3. Radio resource control (radio resource control, RRC) signaling, media access control control element (media access control control element, MAC) signaling, and physical layer (physical layer, PHY) signaling.

FIG. 2 shows a protocol architecture of a control plane of LTE or NR according to an embodiment of this application.

Refer to FIG. 2. A terminal device (for example, user equipment (user equipment, UE)) and a network device (for example, a gNB) both include an RRC layer, a packet data convergence protocol (packet data convergence protocol, PDCP) layer, a radio link control (radio link control, RLC) layer, a MAC layer, and a PHY layer. The terminal device and the network device may interact with each other by using signaling at various layers.

For example, common signaling in an air interface includes signaling on an RRC layer (RRC signaling for short), signaling on a MAC layer (MAC signaling for short), and signaling on a PHY layer (PHY signaling for short). The MAC signaling may usually be a media access control control element (media access control control element, MAC CE), and the PHY signaling may be downlink control information (downlink control information, DCI).

The RRC signaling, as high-layer signaling, has advantages of a large capacity and high reliability, but also has disadvantages of large signaling overheads and a large delay. In contrast, the MAC signaling and the PHY signaling, as underlying signaling, are not as good as RRC signaling in terms of the capacity and the reliability, but have small signaling overheads and a low delay, and are suitable for sending dynamic content. Therefore, generally, the MAC signaling and the PHY signaling may alternatively be referred to as dynamic signaling.

As described in Background, in the current conditional handover mechanism, the network device sends all the configuration parameters of each candidate cell by using the RRC configuration message. However, the terminal device actually hands over to the target cell by using only the configuration parameters of the target cell, and configuration parameters of other candidate cells are not used. Consequently, large signaling overheads are caused during air interface transmission.

Based on this, an embodiment of this application provides a cell handover method, so that signaling overheads of air interface transmission can be effectively reduced.

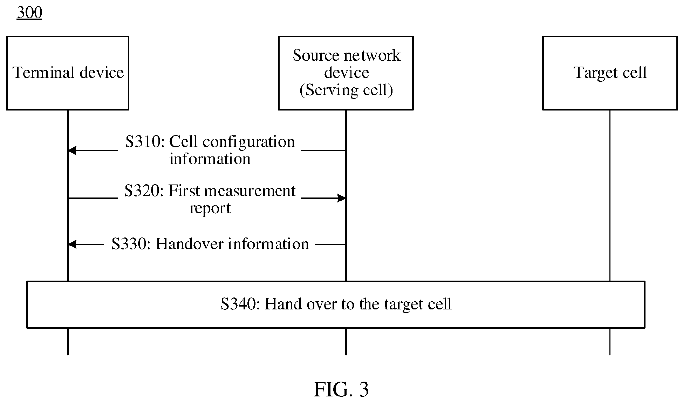

FIG. 3 is a schematic flowchart of a cell handover method 300 according to an embodiment of this application. The method 300 is at least performed by a terminal device and a source network device. If a target cell and a serving cell do not belong to a same network device, the method 300 may be performed by the terminal device, the source network device, and a target network device to which the target cell belongs. For example, the source network device may be a source base station, and the target network device may be a target base station.

S310: A source network device sends cell configuration information to a terminal device, where the cell configuration information includes a first configuration parameter of each of M1 candidate cells, the first configuration parameter is a part of configuration parameters used for accessing each candidate cell, the first configuration parameter includes a cell identifier of each candidate cell, and M1 is an integer greater than or equal to 1.

Correspondingly, the terminal device receives the cell configuration information.

For example, the cell configuration information may be sent to the terminal device by using high-layer signaling. For example, the cell configuration information may be sent by using an RRC message, or the cell configuration information is carried in an RRC message.

For example, the first configuration parameters of the M1 candidate cells in the cell configuration information may be sent in a form of a cell list.

When the terminal device accesses a new cell, an access process can be implemented only by using a related configuration parameter. The configuration parameters used for accessing each candidate cell indicate all configuration parameters used for accessing each candidate cell. The terminal device may access each candidate cell by using all the configuration parameters of each candidate cell.

In this embodiment of this application, the cell configuration information includes the first configuration parameter of each of the M1 candidate cells, and the first configuration parameter is a part of the configuration parameters for accessing each candidate cell. That is, the source network device sends a part of parameters of each of the M1 candidate cells to the terminal device in advance. To reduce signaling overheads, another part of parameters are not to be sent temporarily, and are then sent until the target cell is determined.

The first configuration parameter includes the cell identifier of each candidate cell, so that the terminal device learns of the M1 candidate cells, to perform cell measurement. It should be understood that, the cell identifier of each candidate cell is a parameter at least included in the first configuration parameter, and the first configuration parameter may further include various other parameters (for example, a cell wireless network temporary identifier of each candidate cell, a handover timer, and the like). This is not limited in this embodiment of this application, and details are described below.

Before the handover, the source network device obtains the first configuration parameters of the M1 candidate cells in advance, and sends the first configuration parameters of the M1 candidate cells to the terminal device, so that the network side prepares for cell handover of the terminal device in advance. Further, after determining the target cell and performing actual handover, the terminal device may access the target cell by using the first configuration parameter of the target cell and a subsequently sent second configuration parameter of the target cell. In this way, a handover success rate can be increased, communication interruption for a long time is avoided, and user experience is improved.

For example, when signal quality of a serving cell is good or not poor, the source network device obtains and sends the first configuration parameters of the M1 candidate cells to the terminal device. For example, the signal quality of the serving cell may be determined by using one or more of the following: a reference signal received power (reference signal receiving power, RSRP), reference signal received quality (reference signal receiving quality, RSRQ), and a signal to interference plus noise ratio (signal to interference plus noise ratio, SINR). It should be understood that, any information that can represent communication quality may be used in this embodiment of this application.

For example, the source network device may send a measurement configuration to the terminal device in advance, the terminal device reports a measurement result, and the source network device determines at least one candidate cell based on the measurement result, to obtain the first configuration parameters of the M1 candidate cells. The M1 candidate cells are some or all of the at least one candidate cell. For specific descriptions in which the source network device obtains the first configuration parameters of the M1 candidate cells, refer to related descriptions below, and details are not described herein.

S320: The terminal device sends a first measurement report to the source network device, where the first measurement report indicates signal quality of M2 of the M1 candidate cells. Correspondingly, the source network device receives the first measurement report.

After receiving the cell configuration information, the terminal device learns of the M1 candidate cells, measures each of the M1 candidate cells after the signal quality of the serving cell decreases, and reports the signal quality of each candidate cell to the source network device after a measurement condition is satisfied, so that the source network device determines the target cell based on the signal quality of each candidate cell.

In this embodiment of this application, the terminal device may perform measurement on the M1 candidate cells. However, it is probably that signal quality of some candidate cells is poor (or even poorer than the signal quality of the serving cell), and the terminal device may not report the signal quality of the candidate cells with poor signal quality when the measurement condition is not satisfied. Therefore, the signal quality of the M2 candidate cells in the first measurement report may be signal quality of some or all of the M1 candidate cells. When M2 is equal to M1, the M2 candidate cells are all of the M1 candidate cells, and the M2 candidate cells are also the M1 candidate cells. When M2 is less than M1, the M2 candidate cells are a part of the M1 candidate cells.

In an example, the measurement condition may be shared by one or more candidate cells. That is, when there are a plurality of candidate cells, the plurality of candidate cells may correspond to a same measurement condition.

In another example, the measurement condition may correspond to a cell. That is, when there is a plurality of candidate cells, the plurality of candidate cells may have respective corresponding measurement conditions, and measurement conditions corresponding to different candidate cells may be the same or may be different.

It should be understood that, the foregoing measurement condition may be understood as a trigger condition for the terminal device to report a measurement report of a specific candidate cell. The measurement report of the specific candidate cell is reported when signal quality of the specific candidate cell satisfies the measurement condition. It should be further understood that, the first measurement report includes measurement reports of all candidate cells (the M2 candidate cells).

In some embodiments, the measurement condition may be a specific measurement event. That is, the measurement event may include at least one of the following: an event A1, an event A2, an event A3, an event A4, an event A5, an event A6, an event B1, and an event B2. The event A1 may be specifically that signal quality of a serving cell is greater than a preset first threshold. The event A2 may be specifically that signal quality of a serving cell is less than a preset second threshold. The event A3 may be specifically that signal quality of a candidate cell is greater than signal quality of a primary cell (primary cell, PCell) or a primary secondary cell (primary secondary cell, PSCell) by a preset third threshold. The event A4 may be specifically that signal quality of a candidate cell is greater than a preset fourth threshold. The event A5 may be specifically that signal quality of a primary cell or a primary secondary cell is less than a preset fifth threshold, and signal quality of a candidate cell or a secondary cell is greater than a preset sixth threshold. The event A6 may be specifically that signal quality of a candidate cell is greater than that of a secondary cell. For specific descriptions of each event, refer to that in the conventional technology. For brevity, details are not described again.

For example, during implementation, the source network device may send the measurement information to the terminal device. The measurement information may include a type of a measurement event and a threshold corresponding to each measurement event.

Similar to the signal quality of the serving cell, for example, the signal quality of the candidate cell may be determined by using one or more of the following: a RSRP, RSRQ, and an SINR. It should be understood that, any information that can represent communication quality may be used in this embodiment of this application.

It should be understood that, the first measurement report not only indicates the signal quality of the M2 candidate cells, but also indicates the signal quality of the serving cell.

S330: The source network device sends handover information to the terminal device, where the handover information includes a second configuration parameter of a target cell, the target cell belongs to the M2 candidate cells, the target cell is determined based on the signal quality of the M2 candidate cells, and the second configuration parameter of the target cell is a configuration parameter other than the first configuration parameter of the target cell in configuration parameters used for accessing the target cell.

The source network device receives the first measurement report sent by the terminal device, determines the target cell based on the signal quality of the M2 candidate cells, obtains the second configuration parameter of the target cell, and sends the handover information to the terminal device. The handover information indicates the terminal device to hand over to the target cell, and the handover information includes the second configuration parameter of the target cell. In this way, after receiving the handover information, the terminal device learns that the terminal device needs to hand over to the target cell, and can hand over to the target cell by using the first configuration parameter of the target cell obtained in S320 and the second configuration parameter obtained in this step.

The second configuration parameter is a part of all the configuration parameters used for accessing the target cell, and is a parameter in all the configuration parameters other than the first configuration parameter of the target cell. Therefore, the sum of the second configuration parameter and the first configuration parameter of the target cell is all the configuration parameters used by the terminal device for accessing the target cell. It should be understood that, the first configuration parameter of the target cell has been sent to the terminal device in step S310 by using the cell configuration information.

In some embodiments, the handover information is carried in the DCI or the MAC CE.

The handover information includes the second configuration parameter of the target cell, and does not relate to another configuration parameter of another candidate cell. Therefore, content of the handover information is less. The handover information is sent by using the underlying DCI or MAC CE, so that signaling overheads and a delay of air interface transmission can be effectively reduced.

In some embodiments, the second configuration parameter of the target cell at least includes a cell identifier of the target cell. In this way, the terminal device may determine the first configuration parameter of the target cell from the cell configuration information based on the cell identifier of the target cell, and further accesses the target cell based on the second configuration parameter of the target cell.

In some other embodiments, when M2 is 1, that is, when there is only one M2 candidate cell (M1 may be 1, or may be greater than or equal to 1), the second configuration parameter of the target cell may not include the cell identifier of the target cell. Because the terminal device learns that a measurement report of only one candidate cell is reported, after the handover information is received, the terminal device determines that the handover information is the second configuration parameter of the candidate cell by default, and the candidate cell is also the target cell. Therefore, the terminal device can determine the first configuration parameter of the target cell from the cell configuration information, and further access the target cell based on the second configuration parameter of the target cell.

For specific descriptions of the second configuration parameter of the target cell, refer to related descriptions below, and details are not described again.

As described above, the source network device may determine the target cell based on the signal quality of the M2 candidate cells. It should be understood that, this manner is merely an example for descriptions and should not constitute any limitation on this embodiment of this application.

In some embodiments, the source network device can not only determine the target cell based on the signal quality of the M2 candidate cells, but also comprehensively determine the target cell with reference to other factors. For example, the source network device may determine the target cell based on the signal quality of the M2 candidate cells and load of a network device to which each candidate cell belongs.

It should be understood that, generally, the network device determines a candidate cell with better signal quality as the target cell. For example, a threshold may be set, and each candidate cell with signal quality that is greater than the threshold may have a chance to be the target cell.

In an example, if the target cell is determined based on only the signal quality of the candidate cell, any candidate cell with signal quality that is greater than the threshold may be determined as the target cell, or a candidate cell with signal quality that is greater than the threshold and that has the best signal quality may be determined as the target cell. There is no limitation on a specific implementation process herein.

In another example, if the target cell is determined based on the signal quality of the candidate cell and other factors after comprehensive consideration, a candidate cell satisfying other factors may be selected from the candidate cells with signal quality that is greater than the threshold as the target cell, or an optimal candidate cell after comprehensive consideration is selected as the target cell. There is no limitation on a specific implementation process herein.

S340: The terminal device hands over to the target cell based on the first configuration parameter of the target cell and the second configuration parameter of the target cell.

The terminal device may perform synchronization in the target cell, and initiate a random access procedure. After the random access succeeds, it may be considered that the terminal device is successfully handed over to the target cell, and the terminal device may continue to perform a service in the target cell.

It should be understood that, the target cell may be a cell associated with the source network device, or may be a cell associated with another network device (that is, the target network device) different from the source network device. When the target cell is a cell associated with the source network device, the terminal device interacts with the source network device to implement cell handover. When the target cell is a cell associated with the target network device, the terminal device interacts with the target network device to implement cell handover.

It should be noted that, the cell associated with the source network device described herein represents a cell covered by the source network device. Descriptions of the cell associated with the network device below are the same as descriptions herein, and details are not described again.

According to the cell handover method provided in this embodiment of this application, the source network device first sends, to the terminal device, the obtained first configuration parameter of at least one (for example, M1) candidate cell, to facilitate preparation of handover of the candidate cell. After determining the target cell, the source network device sends the second configuration parameter of the target cell to the terminal device. Compared with an existing solution in which configuration parameters of all candidate cells are sent by using RRC signaling, in technical solutions provided in this embodiment of this application, information (the cell configuration information and the handover information) is sent to the terminal device twice, and a second configuration parameter of another candidate cell other than the target cell is not sent, to effectively reduce signaling overheads of air interface transmission.

In addition, in the conventional technology, the network device sends configuration parameters of all candidate cells, and the network side needs to reserve, for all the candidate cells in advance, all the configuration parameters used for accessing the candidate cells. Consequently, network overheads are greatly increased. However, in this embodiment of this application, because the second configuration parameter includes a related parameter of the target cell, and may not be related to a parameter of another candidate cell other than the target cell, the network side does not need to reserve the corresponding second configuration parameter for the another candidate cell in advance, and only needs to reserve the first configuration parameter corresponding to the another candidate cell in advance. In addition, after the target cell is determined, the second configuration parameter related to the target cell is reserved and sent to the terminal device. This can well reduce resource overheads on the network side.

Therefore, in this embodiment of this application, in the solution in which the source network device sends the cell configuration information including the first configuration parameter of each candidate cell and the handover information including the second configuration parameter of the target cell, the terminal device completes handover to the target cell, and network overheads and air interface signaling overheads may be considered. In other words, both the network overheads and the air interface signaling overheads may be reduced.

For ease of descriptions of the first configuration parameter and the second configuration parameter, one candidate cell is used as an example below, and configuration parameters used for accessing each candidate cell are first used as an example for descriptions.

The configuration parameters used for accessing the candidate cell include but are not limited to: a cell identifier of the candidate cell, a cell radio-network temporary identifier (cell-radio network temporary identifier, C-RNTI) allocated by the candidate cell to the terminal device, a parameter used for configuring random access channel (random access channel, RACH) resources of the candidate cell, a downlink configuration parameter of the candidate cell, an uplink configuration parameter of the candidate cell, a synchronization signal block (synchronization signal block, SSB) transmission power, and another parameter.

Optionally, if the candidate cell is a TDD cell, the configuration parameters used for accessing the candidate cell further include distribution of uplink and downlink subframes.

Optionally, the configuration parameters used for accessing the candidate cell may further include: a measurement-related parameter of the candidate cell, a parameter of a frequency of the candidate cell, a physical layer configuration parameter, a MAC layer configuration parameter, an RLC layer configuration parameter, a PDCP layer configuration parameter, a service data adaptation protocol (service data adaptation porotocol, SDAP) layer configuration parameter, an RRC layer configuration parameter, carried configuration information, and the like.

The C-RNTI is a dynamic identifier allocated to a terminal device by a network device to which a candidate cell belongs. The C-RNTI uniquely identifies a terminal device on an air interface of a cell. The C-RNTI is valid only when the terminal device is in a connected mode.

For example, the parameter used for configuring the random access channel (random access channel, RACH) resources of the candidate cell includes but is not limited to: a preamble index (preamble index), a parameter used for indicating time-frequency resources of the RACH, an offset between a frequency of a candidate cell and a cell center frequency, a target power received by a preamble, and random access response window size (ra-response window size), a maximum quantity of times of preamble transmission (preamble trans max), a power ramping step (power ramping step), a preamble initial received target power (preamble initial received target power), and a mac-contention resolution timer (mac-contention resolution timer).

It should be understood that, the parameter used for configuring the RACH resources of the candidate cell herein is only an example for descriptions and shall not constitute any limitation on this embodiment of this application.

For example, the downlink configuration parameter of the candidate cell includes but is not limited to: a parameter configured for a bandwidth part (bandwidth part, BWP), and the like.

For example, the measurement-related parameter of the candidate cell may include but is not limited to: a measurement identifier (measID), a measurement frequency, and the like.

For example, the parameter of the frequency of the candidate cell may include, but is not limited to: an absolute frequency of an SSB, and an absolute frequency position of a reference resource block (resource block, RB). The absolute frequency of the SSB may be, for example, a cell "absolute frequency SSB (absolute Frequency SSB)". For example, the reference RB may be a common resource block (common resource block, CRB) 0, for example, may be marked as CRB 0. The absolute frequency position of the reference RB may include, for example, a cell "absolute frequency point A (absolute Frequency Point A)", a "frequency band list (frequency band list)", a "subcarrier spacing (subcarrier space, SCS)-specific carrier list (scs-Specific Carrier List)", and the like.

It should be understood that, the foregoing list of the configuration parameters used for accessing the candidate cell is merely an example and should not constitute any limitation on this application. This application does not exclude a possibility that the configuration parameters used for accessing the candidate cell include other parameters corresponding to the candidate cell other than the foregoing listed parameters. The terminal device is specifically subject to a parameter required by the terminal device to successfully access the new cell.

The first configuration parameter is a part of parameters of the configuration parameters used for accessing the candidate cell. For example, the first configuration parameter may include a part of semi-static parameters, and/or may include a parameter that can be shared with another terminal device. In this way, frequent or repeated sending of some same information can be avoided. This helps reduce signaling overheads to some extent.

The second configuration parameter is another part of parameters of the configuration parameters used for accessing the candidate cell. For example, the second configuration parameter may include a part of parameters specific (or dedicated) to the candidate cell, and/or may include a part of parameters of resources having higher reservation costs. In this way, both the signaling overheads and the network overheads can be reduced.

The following merely uses an example of the second configuration parameter as descriptions. The first configuration parameter is a parameter other than the second configuration parameter in all the configuration parameters used for accessing the candidate cell.

In some embodiments, the second configuration parameter includes: at least a part of parameters used for configuring random access channel PACH resources.

It should be understood that, the at least a part of parameters represent some or all of the parameters used for configuring the PACH resources. For specific descriptions of the parameters used for configuring the PACH resources, refer to the foregoing and related descriptions in the conventional technology, and details are not described again.

Contention for the PACH resources are fierce. If corresponding PACH resources are reserved for each candidate cell in advance (where the PACH resources may be reserved for a long time), compared with other resources, the network side has higher reservation costs. Therefore, the second configuration parameter of the target cell includes at least a part of parameters used for configuring the PACH resources, so that the network side does not need to reserve at least a part of parameters that are of all candidate cells and that are used for configuring PACH resources in advance. Only after the target cell is determined, the network side may only need to reserve at least a part of parameters of the target cell, to further effectively reduce resource overheads on the network side.

In addition, with reference to an embodiment in which the handover information is carried in the DCI or the MAC CE, because the MAC CE or the DCI has a small capacity, a capacity of the at least a part of parameters that are of the target cell and that are used for configuring the PACH resources is also small. Therefore, it is easier to send, by using the MAC CE or the DCI, the at least a part of parameters that are of the target cell and that are used for configuring the PACH resources. In conclusion, the handover information includes the second configuration parameter of the target cell, and the second configuration parameter includes at least a part of parameters used for configuring the PACH resources, so that the network overheads, the air interface delay, and the air interface signaling overheads can be further reduced.

In an example, the at least a part of parameters used for configuring the PACH resources include a preamble index.

The preamble is actual content sent by the terminal device over the RACH, and includes a cyclic prefix (cyclic prefix, CP) with a length of Tcp and a sequence (sequence) with a length of Tseq. Each cell has 64 preambles for selection. Preambles allocated to different terminal devices are different in many cases. That is, the preambles of different cells are different to a large extent, and cannot be shared with another terminal device in the cell to a large extent. Therefore, when a capacity that can be accommodated by the handover information is limited, the second configuration parameter includes the preamble index. This can reduce a delay and signaling overheads and is easier to implement.

It should be understood that, the second configuration parameter described above is only an example for descriptions, and the second configuration parameter may include another parameter. This is not limited in this embodiment of this application.

It should be noted that, in the first configuration parameter and the second configuration parameter, the first configuration parameter includes the cell identifier of the corresponding candidate cell, and the second configuration parameter may include the cell identifier of the target cell, or may not include the cell identifier of the target cell, provided that the target cell to be finally handed over can be learned based on the second configuration parameter, to determine the first configuration parameter of the target cell in the cell configuration information. For detailed descriptions about whether the second configuration information of the target cell includes the cell identifier of the target cell, refer to related descriptions above, and details are not described again.

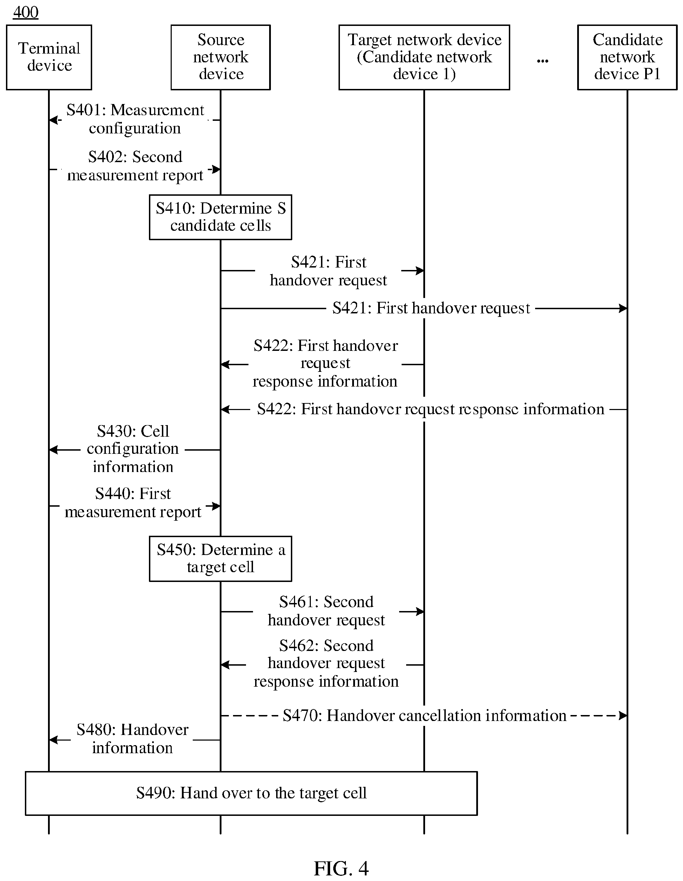

FIG. 4 is a schematic flowchart of a cell handover method 400 according to an embodiment of this application. In the method, candidate network devices to which M1 candidate cells belong include a network device different from a source network device, and the source network device is different from a target network device to which the target cell belongs. An example in which there are P1 candidate network devices, and a candidate network device 1 in the P1 candidate network devices is a target network device is used to describe the method 400.

S410: A source network device determines S candidate cells, where S is an integer less than or less than M1.

For a process in which the source network device determines the S candidate cells, in some embodiments, the methods of step S401 and step S402 may be performed.

S401: The source network device sends a measurement configuration to a terminal device, where the measurement configuration is used for measurement of a plurality of neighboring cells.

For example, the measurement configuration may include a measurement range, a time interval for measurement, a type of a measurement event, a threshold corresponding to each measurement event, and the like.

The measurement range indicates the plurality of neighboring cells. For example, the plurality of neighboring cells may be indicated in a form of a cell list.

Types of the measurement event may include events such as the event A1, the event A2, the event A3, the event A4, the event A5, the event A6, the event B1, and the event B2 described above. For detailed descriptions, refer to related descriptions above and related descriptions in the conventional technology. For brevity, details are not described again.

S402: The terminal device sends a second measurement report to the source network device, where the second measurement result indicates signal quality of N of the plurality of neighboring cells, the N neighboring cells include the S candidate cells, and the S candidate cells include the M1 candidate cells.

It should be understood that, the terminal device may perform measurement on the plurality of neighboring cells. However, it is probably that signal quality of some neighboring cells is poor (or even poorer than the signal quality of the serving cell), and the terminal device may not report the signal quality of the candidate cells with poor signal quality when the measurement event is not satisfied. Therefore, the signal quality of the N neighboring cells in the second measurement report may be signal quality of some or all of the plurality of neighboring cells.

After receiving the second measurement report, the source network device may determine the S candidate cells based on the signal quality of the N neighboring cells, or may determine the S candidate cells based on the signal quality of the N neighboring cells and other factors after comprehensive consideration, to obtain the first configuration parameters of the M1 candidate cells in the S candidate cells.

It should be understood that, generally, the source network device determines a neighboring cell with better signal quality as the candidate cell. For example, a threshold may be set, and each neighboring cell with signal quality that is greater than the threshold may have a chance to be the candidate cell. For specific descriptions of determining the S candidate cells from the N neighboring cells, refer to related descriptions of determining the target cells from the M2 candidate cells in step S330. The process is similar, and details are not described again.

The source network device may send the measurement configuration to the terminal device in advance when signal quality of a serving cell is good or not poor. The terminal device may report the second measurement report based on the measurement configuration, so that the source network device may determine the S candidate cells in advance based on the second measurement report, to obtain the first configuration parameters of the M1 candidate cells in the S candidate cells in advance, so that the network side prepares for cell handover of the terminal device in advance, where M1 is less than or equal to S. In this way, a handover success rate can be increased, communication interruption for a long time is avoided, and user experience is improved.

S421: The source network device sends a first handover request to P1 candidate network devices, where the first handover request includes a terminal identifier of the terminal device, and P1 is an integer greater than or equal to 1.

Candidate cells associated with the P1 candidate network devices are at least a part of the S candidate cells, specifically depending on whether the S candidate cells include a cell associated with the source network device. When the S candidate cells include the cell associated with the source network device, the candidate cells associated with the P1 candidate network devices are cells in the S candidate cells other than the cell associated with the source network device, and are a part of the S candidate cells. When the S candidate cells do not include the cell associated with the source network device, the candidate cells associated with the P1 candidate network devices are all of the S candidate cells.

The source network device sends the first handover request to each candidate network device, where the first handover request indicates to prepare to hand over the terminal device to the candidate cell associated with the corresponding candidate network device, and the first handover request includes the device identifier of the terminal device.

In some embodiments, the first handover request may further include a cell identifier of the candidate cell associated with the corresponding candidate network device.

In other embodiments, the first handover request of some candidate network devices may not include the cell identifier of the candidate cell.

For example, when one candidate network device is associated with only one cell, a first handover request of the candidate network device may not include a cell identifier of a cell associated with the candidate network device. This is because for the candidate network device, as long as the candidate network device receives the first handover request, the candidate network device learns that the source network device requests only a related parameter (the first configuration parameter) of the cell. Therefore, the candidate network device does not need to include the cell identifier of the cell.

In this embodiment of this application, the first handover request may be new information, or may reuse a handover request in the conventional technology. This is not limited herein. For example, in an embodiment in which an existing handover request is reused, a new bit may be added to the handover request, and a bit value of the new bit indicates that the network device does not need to reserve or send the second configuration parameter, or indicates that the network device only reserves or sends the first configuration parameter.

S422: Each of P2 candidate network devices sends first handover request response information to the terminal device in response to the first handover request, where the first handover request response information includes a first configuration parameter of a candidate cell associated with each candidate network device, the P2 candidate network devices are at least a part of the P1 candidate network devices, and all candidate cells associated with the P2 candidate network devices are at least a part of the M1 candidate cells. For detailed descriptions of the first configuration parameter of the candidate cell, refer to related descriptions above, and details are not described again.

The P2 candidate network devices are at least a part of the P1 candidate network devices. This means that the P2 candidate network devices are some or all of the P1 candidate network devices. If the P1 candidate network devices all send the foregoing first handover request response information to the source network device, the P2 candidate network devices are the P1 candidate network devices. If a part of the P1 candidate network devices do not send the foregoing first handover request response information to the source network device, or a part of network devices send information indicating that a first configuration parameter of a related cell cannot be provided, the P2 candidate network devices are a part of the P1 candidate network devices.

All the candidate cells associated with the P2 candidate network devices are at least a part of the M1 candidate cells. This means that all the candidate cells associated with the P2 candidate network devices are some or all of the M1 candidate cells. If the M1 candidate cells include the cell associated with the source network device, all the candidate cells associated with the P2 candidate network devices are cells in the M1 candidate cells other than the cell associated with the source network device, and are a part of the M1 candidate cells. If the M1 candidate cells do not include the cell associated with the source network device, all the candidate cells associated with the P2 candidate network devices are the M1 candidate cells.

S430: The source network device sends cell configuration information to the terminal device, where the cell configuration information includes the first configuration parameter of each of the M1 candidate cells.

The source network device receives the first handover request response information sent by the P2 candidate network devices and obtains the first configuration parameter of each of the M1 candidate cells.

If the S candidate cells determined by the source network device include the candidate cell associated with the source network device in step S410, the source network device determines a first configuration parameter of a candidate cell associated with the source network device. After receiving the first handover request response information sent by the P2 candidate network devices, first configuration parameters of remaining candidate cells can be obtained. In this way, the first configuration parameters of the M1 candidate cells may be finally obtained. All candidate cells associated with the P2 candidate network devices are cells in the M1 candidate cells other than the candidate cell associated with the source network device. It should be understood that, in this case, the source network device may obtain, at any time after S410 and before S430, the first configuration parameter of the candidate cell associated with the source network device. This is not limited herein.

If the S candidate cells determined by the source network device do not include the candidate cell associated with the source network device in step S410, the source network device obtains the first configuration parameter of the M1 candidate cells after receiving the first handover request response information sent by the P2 candidate network devices. All the candidate cells associated with the P2 candidate network devices are the M1 candidate cells.

S440: The terminal device sends a first measurement report to the source network device, where the first measurement report indicates signal quality of M2 of the M1 candidate cells, and M2 is less than or equal to M1.

S450: The source network device determines a target cell.

In some embodiments, the source network device determines the target cell based on the signal quality of the M2 candidate cells.

In other embodiments, the source network device can not only determine the target cell based on the signal quality of the M2 candidate cells, but also comprehensively determine the target cell with reference to other factors. For example, the source network device may determine the target cell based on the signal quality of the M2 candidate cells and load of a network device to which each candidate cell belongs.

For detailed descriptions of this embodiment, refer to related descriptions of determining the target cell by the source network device in S330 above, and details are not described again.

S461: The source network device sends a second handover request to a target network device to which the target cell belongs, where the second handover request includes the terminal identifier of the terminal device, and the target network device is one of the P2 candidate network devices.

It may be understood that, different from the first handover request, the second handover request is sent only to the target network device to which the target cell belongs, and indicates to prepare to hand over the terminal device to the target cell, and the second handover request includes the device identifier of the terminal device.

In some embodiments, the second handover request may further include the cell identifier of the target cell.

In other embodiments, the second handover request may not further include the cell identifier of the target cell.

For example, when the target network device is associated with only one cell (that is, the target cell), the second handover request of the target network device may not include the cell identifier of the target cell. This is because for the target network device, as long as the target network device receives the second handover request, the target network device learns that the source network device requests the second configuration parameter of the target cell. Therefore, the target network device does not need to include the cell identifier of the target cell.

In this embodiment of this application, the second handover request may be new information, or may reuse a handover request in the conventional technology. This is not limited herein. For example, in an embodiment in which an existing handover request is reused, a new bit may be added to the handover request, and a bit value of the new bit indicates that the network device only sends or reserves the second configuration parameter of the target cell.

When the second handover request and the first handover request both reuse an existing handover request, the second handover request and the first handover request may use different bits, and the different bits indicate different types of handover requests. Alternatively, the second handover request and the first handover request may use a same bit, and different values of the bit indicate different types of handover requests.

S462: The target network device sends second handover request response information to the source network device, where the second handover request response information includes the second configuration parameter of the target cell.

In some embodiments, in S470, the source network device sends handover cancellation information to another network device other than the target network device in the P2 candidate network devices, where the handover cancellation information indicates the another network device to cancel handover.

After receiving the handover cancellation information, the another network device learns that the terminal device no longer needs to be handed over to the each associated candidate cell. Therefore, the another network device may release resources (the first configuration parameter) previously reserved for each associated candidate cell, to further reduce network overheads.

According to the cell handover method provided in this embodiment of this application, the source network device sends the handover cancellation information to another network device other than the target network device in all the candidate network devices, so that the another network device may release resources (the first configuration parameter) previously reserved for each associated candidate cell, to further reduce network overheads.

S480: The source network device sends handover information to the terminal device, where the handover information includes the second configuration parameter of the target cell.

S490: The terminal device hands over to the target cell based on the first configuration parameter of the target cell and the second configuration parameter of the target cell.

In the method 400, the source network device negotiates with at least one (for example, P1) candidate network device by using the first handover request, to obtain the first configuration parameters of the M1 candidate cells. In addition, the candidate network devices do not need to reserve the second configuration parameter for each associated candidate cell. The source network device sends the second handover request to the target network device to which the target cell belongs only after the source network device determines the target cell. In this case, the target network device reserves the second configuration parameter of the target cell. For the network side, compared with that in the conventional technology, a second configuration parameter of another cell other than the target cell in the M1 candidate cells is not reserved, to effectively reduce network overheads.

In the method 400, the network devices to which the M1 candidate cells belong include a network device different from the source network device, the source network device and the target network device to which the target cell belongs are different, and the source network device separately obtains the first configuration parameters of the M1 candidate cells and the second configuration parameter of the target cell by sending the handover requests (the first handover request and the second handover request) twice. However, in another case, the source network device may only need to send one handover request or may not send any handover request, to obtain the first configuration parameters of the M1 candidate cells and the second configuration parameter of the target cell. Descriptions are separately provided below.

In some embodiments, the S candidate cells (for example, the S candidate cells determined in step S410) initially determined by the source network device include the candidate cells associated with the source network device and the P1 candidate network devices. The source network device sends the first handover request to the P1 candidate network devices, but the P1 candidate network devices do not feed back first handover request acknowledgment information. Then, the first configuration parameters of the M1 candidate cells in the cell configuration information sent by the source network device are of all candidate cells associated with the source network device, and the target cell determined by the source network device is also a candidate cell associated with the source network device. Therefore, the source network device does not need to send the second handover request, and may send the handover information after determining the second configuration parameter of the target cell.

In some other embodiments, the S candidate cells (for example, the S candidate cells determined in step S410) initially determined by the source network device include the candidate cells associated with the source network device and the P1 candidate network devices. The source network device sends the first handover request to the P1 candidate network devices, and the P2 of the P1 candidate network devices feed back the first handover request acknowledgment information, but the target cell finally determined by the source network device is a cell associated with the source network device. Therefore, the source network device also does not need to send the second handover request, and the source network device may send the handover information after determining the second configuration parameter of the target cell. For example, in this embodiment, after the source network device determines the target cell, the source network device may send the handover cancellation information to the P2 candidate network devices, to indicate the P2 candidate network devices to cancel handover.

In some other embodiments, the S candidate cells (for example, the S candidate cells determined in step S410) initially determined by the source network device are the candidate cells associated with the source network device. Therefore, the source network device does not need to send the first handover request. In this case, S is equal to M1. The source network device may send the cell configuration information after determining the second configuration parameters of the M1 (that is, S) candidate cells. Further, the source network device sends the handover information after determining the second configuration parameter of the target cell.

It should be noted again that, sequence numbers of the steps do not mean an execution sequence in the foregoing method embodiments. The execution sequence of the processes should be determined based on functions and internal logic of the processes, and should not constitute any limitation on the implementation processes of embodiments of this application. For example, step S470 may be performed in any process after S450 (for example, before S461 or S462, or after S480 or S490).

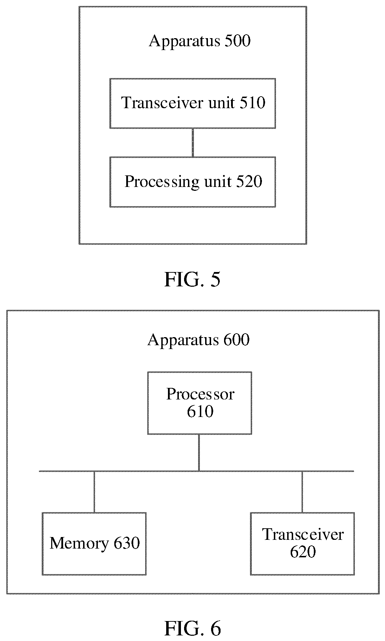

The cell handover method according to embodiments of this application is described in detail with reference to FIG. 1 to FIG. 4 above. A cell handover apparatus according to embodiments of this application is described in detail with reference to FIG. 5 and FIG. 6 below.

FIG. 5 shows a cell handover apparatus 500 according to an embodiment of this application. The apparatus 500 may be a terminal device, a source network device, or a target network device; or may be a chip in a terminal device, a source network device, or a target network device. The apparatus 500 includes a transceiver unit 510 and a processing unit 520.

In a possible implementation, the apparatus 500 is configured to implement processes and steps corresponding to the terminal device in the foregoing method 300 or 400.

The transceiver unit 510 is configured to: receive cell configuration information sent by a source network device, where the cell configuration information includes a first configuration parameter of each of M1 candidate cells, the first configuration parameter is a part of configuration parameters used for accessing each candidate cell, the first configuration parameter includes a cell identifier of each candidate cell, and M1 is an integer greater than or equal to 1.

The transceiver unit 510 is further configured to: send a first measurement report to the source network device, where the first measurement report indicates signal quality of M2 of the M1 candidate cells, and M2 is less than or equal to M1.

The transceiver unit 510 is further configured to: receive handover information sent by the source network device in response to the first measurement report, where the handover information includes a second configuration parameter of a target cell, the target cell belongs to the M2 candidate cells, the target cell is determined based on the signal quality of the M2 candidate cells, and the second configuration parameter of the target cell is a configuration parameter other than the first configuration parameter of the target cell in configuration parameters used for accessing the target cell.

The processing unit 520 is configured to: hand over to the target cell based on the first configuration parameter of the target cell and the second configuration parameter of the target cell.

Optionally, the handover information is carried in downlink control information DCI or a media access control control element MAC CE.

Optionally, the second configuration parameter of the target cell includes: at least a part of parameters used for configuring random access channel PACH resources.

Optionally, the at least a part of parameters include: a preamble index.

Optionally, the transceiver unit 510 is further configured to:
receive a measurement configuration sent by the source network device, where the measurement configuration is used for measurement of a plurality of neighboring cells; and
send a second measurement report to the source network device in response to the measurement configuration, where the second measurement result indicates signal quality of N of the plurality of neighboring cells, and the N neighboring cells include the M1 candidate cells.

In another possible implementation, the apparatus 500 is configured to implement processes and steps corresponding to the source network device in the foregoing method 300 or 400.

The transceiver unit 510 is configured to: send cell configuration information to a terminal device, where the cell configuration information includes a first configuration parameter of each of M1 candidate cells, the first configuration parameter is a part of configuration parameters used for accessing each candidate cell, the first configuration parameter includes a cell identifier of each candidate cell, and M1 is an integer greater than or equal to 1.

The transceiver unit 510 is further configured to: receive a first measurement report sent by the terminal device, where the first measurement report indicates signal quality of M2 of the M1 candidate cells.

The transceiver unit 510 is further configured to: send handover information to the terminal device, where the handover information includes a second configuration parameter of a target cell, the target cell belongs to the M2 candidate cells, the target cell is determined based on the signal quality of the M2 candidate cells, and the second configuration parameter of the target cell is a configuration parameter other than the first configuration parameter of the target cell in configuration parameters used for accessing the target cell. The handover information is carried in downlink control information DCI or a media access control control element MAC CE.

Optionally, the handover information is carried in downlink control information DCI or a media access control control element MAC CE.

Optionally, the second configuration parameter of the target cell includes: at least a part of parameters used for configuring random access channel PACH resources.

Optionally, the at least a part of parameters include: a preamble index.

Optionally, the transceiver unit 510 is further configured to:
send a first handover request to P1 candidate network devices, where the first handover request includes a terminal identifier of the terminal device, and P1 is an integer greater than or equal to 1; and
receive first handover request response information that is sent by each of the P2 candidate network devices in response to the first handover request, where the first handover request response information includes a first configuration parameter of a candidate cell associated with each candidate network device, the P2 candidate network devices are at least a part of the P1 candidate network devices, and all candidate cells associated with the P2 candidate network devices are at least a part of the M1 candidate cells.

Optionally, the transceiver unit 510 is further configured to:
send a second handover request to a target network device to which the target cell belongs, where the second handover request includes the terminal identifier of the terminal device, and the target network device is one of the P2 candidate network devices; and
receive second handover request response information sent by the target network device, where the second handover request response information includes the second configuration parameter of the target cell.

Optionally, the transceiver unit 510 is further configured to: send handover cancellation information to another network device other than the target network device in the P2 candidate network devices, where the handover cancellation information indicates the another network device to cancel handover.

Optionally, the transceiver unit 510 is further configured to:
send a measurement configuration to the terminal device, where the measurement configuration is used for measurement of a plurality of neighboring cells; and
receive a second measurement report sent by the terminal device, where the second measurement result indicates signal quality of N of the plurality of neighboring cells, and the N neighboring cells include the M1 candidate cells.

In another possible implementation, the apparatus 500 is configured to implement processes and steps corresponding to the target network device in the foregoing method 400.

The transceiver unit 510 is configured to: receive a first handover request sent by a source network device, where the first handover request includes a terminal identifier of a terminal device.

The transceiver unit 510 is further configured to: send first handover request acknowledgment information to the source network device in response to the first handover request, where the first handover request acknowledgment information includes a first configuration parameter of at least one candidate cell.

The transceiver unit 510 is further configured to: receive a second handover request sent by the source network device, where the second handover request includes the terminal identifier of the terminal device.

The transceiver unit 510 is further configured to: send second handover request acknowledgment information to the source network device, where the second handover request acknowledgment information includes a second configuration parameter of the target cell, and the target cell belongs to the at least one candidate cell.

It should be understood that, the apparatus 500 herein is embodied in a form of a functional unit. The term "unit" herein may refer to an application-specific integrated circuit (application specific integrated circuit, ASIC), an electronic circuit, a processor (for example, a shared processor, a dedicated processor, or a group processor) configured to execute one or more software or firmware programs and a memory, a combined logic circuit, and/or another suitable component that supports the described functions. In an optional example, a person skilled in the art may understand that the apparatus 500 may be specifically the terminal device, the source network device, or the target network device in the foregoing embodiments, and the apparatus 500 may be configured to perform the processes and/or steps corresponding to the terminal device, the source network device, or the target network device in the foregoing method embodiments. To avoid repetition, details are not described herein again.

The apparatus 500 in the foregoing solutions has functions of implementing the corresponding steps performed by the terminal device, the source network device, or the target network device in the foregoing methods. The functions may be implemented by hardware, or may be implemented by hardware executing corresponding software. The hardware or the software includes one or more modules corresponding to the functions. For example, a sending unit may be replaced with a transmitter, a receiving unit may be replaced with a receiver, and another unit such as a determining unit may be replaced with a processor, respectively performing receiving and sending operations and a related processing operation in each method embodiment.

FIG. 6 is a diagram of a structure of an apparatus 600 according to an embodiment of this application. The apparatus 600 includes a processor 610, a transceiver 620, and a memory 630. The processor 610, the transceiver 620, and the memory 630 communicate with each other through an internal connection path. The memory 630 is configured to store instructions. The processor 610 is configured to execute the instructions stored in the memory 630, to control the transceiver 620 to send a signal and/or receive a signal.

In a possible implementation, the apparatus 600 is configured to implement processes and steps corresponding to the terminal device in the foregoing method 300 or 400.

The transceiver 620 is configured to: receive cell configuration information sent by a source network device, where the cell configuration information includes a first configuration parameter of each of M1 candidate cells, the first configuration parameter is a part of configuration parameters used for accessing each candidate cell, the first configuration parameter includes a cell identifier of each candidate cell, and M1 is an integer greater than or equal to 1.

The transceiver 620 is further configured to: send a first measurement report to the source network device, where the first measurement report indicates signal quality of M2 of the M1 candidate cells, and M2 is less than or equal to M1.

The transceiver 620 is further configured to: receive handover information sent by the source network device in response to the first measurement report, where the handover information includes a second configuration parameter of a target cell, the target cell belongs to the M2 candidate cells, the target cell is determined based on the signal quality of the M2 candidate cells, and the second configuration parameter of the target cell is a configuration parameter other than the first configuration parameter of the target cell in configuration parameters used for accessing the target cell. The handover information is carried in downlink control information DCI or a media access control control element MAC CE.

The processor 610 is configured to: hand over to the target cell based on the first configuration parameter of the target cell and the second configuration parameter of the target cell.

In another possible implementation, the apparatus 600 is configured to implement processes and steps corresponding to the source network device in the foregoing method 300 or 400.

The transceiver 620 is configured to: send cell configuration information to a terminal device, where the cell configuration information includes a first configuration parameter of each of M1 candidate cells, the first configuration parameter is a part of configuration parameters used for accessing each candidate cell, the first configuration parameter includes a cell identifier of each candidate cell, and M1 is an integer greater than or equal to 1.

The transceiver 620 is further configured to: receive a first measurement report sent by the terminal device, where the first measurement report indicates signal quality of M2 of the M1 candidate cells.

The transceiver 620 is further configured to: send handover information to the terminal device, where the handover information includes a second configuration parameter of a target cell, the target cell belongs to the M2 candidate cells, the target cell is determined based on the signal quality of the M2 candidate cells, and the second configuration parameter of the target cell is a configuration parameter other than the first configuration parameter of the target cell in configuration parameters used for accessing the target cell. The handover information is carried in downlink control information DCI or a media access control control element MAC CE.

In another possible implementation, the apparatus 600 is configured to implement processes and steps corresponding to the target network device in the foregoing method 400.

The transceiver 620 is configured to: receive a first handover request sent by a source network device, where the first handover request includes a terminal identifier of a terminal device.

The transceiver 620 is further configured to: send first handover request acknowledgment information to the source network device in response to the first handover request, where the first handover request acknowledgment information includes a first configuration parameter of at least one candidate cell.

The transceiver 620 is further configured to: receive a second handover request sent by the source network device, where the second handover request includes the terminal identifier of the terminal device.

The transceiver 620 is further configured to: send second handover request acknowledgment information to the source network device, where the second handover request acknowledgment information includes a second configuration parameter of the target cell, and the target cell belongs to the at least one candidate cell.

It should be understood that, the apparatus 600 may be specifically any one of the terminal device, the source network device, or the target network device in the foregoing embodiments, and may be configured to perform the steps and/or processes corresponding to any one of the terminal device, the source network device, or the target network device in the foregoing method embodiments. Optionally, the memory 630 may include a read-only memory and a random access memory, and provide instructions and data to the processor. A part of the memory may further include a nonvolatile random access memory. For example, the memory may further store information of a device type. The processor 610 may be configured to execute the instructions stored in the memory, and when the processor 610 executes the instructions stored in the memory, the processor 610 is configured to perform the steps and/or processes of the foregoing method embodiments corresponding to the terminal device, the source network device, or the target network device.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that, the disclosed system, apparatus, and method may be implemented in other manners. For example, the described embodiment of the terminal device is merely an example. For example, division into the modules is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected depending on actual requirements to achieve the objectives of the solutions in embodiments.

In addition, functional units in embodiments of this application may be integrated into one processing unit, or each of the units may exist alone physically, or two or more units may be integrated into one unit.

It should be understood that, sequence numbers of the processes do not mean an execution sequence in various embodiments of this application. The execution sequence of the processes should be determined based on functions and internal logic of the processes, and should not constitute any limitation on the implementation processes of embodiments of this application.

In addition, the term "and/or" in this specification describes only an association relationship between associated objects and indicates that three relationships may exist. For example, A and/or B may represent the following three cases: Only A exists, both A and B exist, and only B exists. In addition, the character "/" in this specification generally indicates an "or" relationship between the associated objects.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk drive, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, a protection scope of this application shall be subject to a protection scope of the claims. In conclusion, the foregoing descriptions are merely preferred embodiments the technical solutions of this application and are not intended to limit the protection scope of this application. Any modification, equivalent replacement, or improvement made without departing from the spirit and principle of this application shall fall within the protection scope of this application.

## Claims

1. A cell handover method, comprising:
receiving cell configuration information sent by a source network device, wherein the cell configuration information comprises a first configuration parameter of each of M1 candidate cells, the first configuration parameter is a part of configuration parameters used for accessing each candidate cell, the first configuration parameter comprises a cell identifier of each candidate cell, and M1 is an integer greater than or equal to 1;
sending a first measurement report to the source network device, wherein the first measurement report indicates signal quality of M2 of the M1 candidate cells, and M2 is less than or equal to M1;
receiving handover information sent by the source network device in response to the first measurement report, wherein the handover information comprises a second configuration parameter of a target cell, the target cell belongs to the M2 candidate cells, the target cell is determined based on the signal quality of the M2 candidate cells, and the second configuration parameter of the target cell is a configuration parameter other than the first configuration parameter of the target cell in configuration parameters used for accessing the target cell; and
handing over to the target cell based on the first configuration parameter of the target cell and the second configuration parameter of the target cell.

2. The method according to claim 1, wherein the second configuration parameter of the target cell comprises: at least a part of parameters used for configuring random access channel PACH resources.

3. The method according to claim 2, wherein the at least a part of parameters comprise: a preamble index.

4. The method according to any one of claims 1 to 3, wherein the handover information is carried in downlink control information DCI or a media access control control element MAC CE.

5. The method according to any one of claims 1 to 4, wherein before the receiving cell configuration information sent by a source network device, the method further comprises:
receiving a measurement configuration sent by the source network device, wherein the measurement configuration is used for measurement of a plurality of neighboring cells; and
sending a second measurement report to the source network device in response to the measurement configuration, wherein the second measurement result indicates signal quality of N of the plurality of neighboring cells, and the N neighboring cells comprise the M1 candidate cells.

6. A cell handover method, comprising:
sending cell configuration information to a terminal device, wherein the cell configuration information comprises a first configuration parameter of each of M1 candidate cells, the first configuration parameter is a part of configuration parameters used for accessing each candidate cell, the first configuration parameter comprises a cell identifier of each candidate cell, and M1 is an integer greater than or equal to 1;
receiving a first measurement report sent by the terminal device, wherein the first measurement report indicates signal quality of M2 of the M1 candidate cells; and
sending handover information to the terminal device, wherein the handover information comprises a second configuration parameter of a target cell, the target cell belongs to the M2 candidate cells, the target cell is determined based on the signal quality of the M2 candidate cells, and the second configuration parameter of the target cell is a configuration parameter other than the first configuration parameter of the target cell in configuration parameters used for accessing the target cell.

7. The method according to claim 6, wherein the second configuration parameter of the target cell comprises: at least a part of parameters used for configuring random access channel PACH resources.

8. The method according to claim 7, wherein the at least a part of parameters comprise: a preamble index.

9. The method according to any one of claims 6 to 8, wherein the handover information is carried in downlink control information DCI or a media access control control element MAC CE.

10. The method according to any one of claims 6 to 9, wherein before the sending cell configuration information to a terminal device, the method further comprises:
sending a first handover request to P1 candidate network devices, wherein the first handover request comprises a terminal identifier of the terminal device, and P1 is an integer greater than or equal to 1; and
receiving first handover request response information that is sent by each of the P2 candidate network devices in response to the first handover request, wherein the first handover request response information comprises a first configuration parameter of a candidate cell associated with each candidate network device, the P2 candidate network devices are at least a part of the P1 candidate network devices, and all candidate cells associated with the P2 candidate network devices are at least a part of the M1 candidate cells.

11. The method according to claim 10, wherein before the sending handover information to the terminal device, the method further comprises:
sending a second handover request to a target network device to which the target cell belongs, wherein the second handover request comprises the terminal identifier of the terminal device, and the target network device is one of the P2 candidate network devices; and
receiving second handover request response information sent by the target network device, wherein the second handover request response information comprises the second configuration parameter of the target cell.

12. The method according to claim 11, wherein the method further comprises:
sending handover cancellation information to another network device other than the target network device in the P2 candidate network devices, wherein the handover cancellation information indicates the another network device to cancel handover.

13. The method according to any one of claims 6 to 12, wherein before the sending cell configuration information to a terminal device, the method further comprises:
sending a measurement configuration to the terminal device, wherein the measurement configuration is used for measurement of a plurality of neighboring cells; and
receiving a second measurement report sent by the terminal device, wherein the second measurement result indicates signal quality of N of the plurality of neighboring cells, and the N neighboring cells comprise the M1 candidate cells.

14. A terminal device, comprising:
a memory, configured to store computer instructions; and
a processor, configured to invoke the computer instructions stored in the memory, to perform the method according to any one of claims 1 to 5.

15. A network device, comprising:
a memory, configured to store computer instructions; and
a processor, configured to invoke the computer instructions stored in the memory, to perform the method according to any one of claims 6 to 13.

16. A computer-readable storage medium, wherein the computer-readable storage medium is configured to store computer instructions, and the computer instructions are configured for implementing the method according to any one of claims 1 to 5, or the computer instructions are configured for implementing the method according to any one of claims 6 to 13.

17. A chip, wherein the chip comprises:
a memory, configured to store instructions; and
a processor, configured to invoke and run the instructions from the memory, to enable a communication device installed with the chip system to perform the method according to any one of claims 1 to 5, or to enable a communication device installed with the chip system to perform the method according to any one of claims 6 to 13.
